(19) Europäisches Patentamt
European Patent Office
Office européen des brevets

(11) **EP 1 184 993 B1**

(12) **EUROPEAN PATENT SPECIFICATION**

(45) Date of publication and mention
of the grant of the patent:
**20.08.2008   Bulletin 2008/34**

(51) Int Cl.:
*H04B 1/707* (2006.01)      *H04B 7/26* (2006.01)

(21) Application number: **01250309.0**

(22) Date of filing: **25.08.2001**

(54) **A method and circuit for cell search in W-CDMA systems**

Verfahren und Schaltung zur Zellsuche in W-CDMA-Systemen

Procédé et circuit de recherche de cellule dans des systèmes W-AMRC

(84) Designated Contracting States:
**DE**

(30) Priority:   **30.08.2000   JP 2000260608**

(43) Date of publication of application:
**06.03.2002   Bulletin 2002/10**

(73) Proprietor: **NEC Electronics Corporation
Kawasaki, Kanagawa 211-8668 (JP)**

(72) Inventors:
 • **Tsuneki, Kiyoshi,
c/o NEC Corporation
Tokyo (JP)**
 • **Maruyama, Yuichi,
c/o NEC Micro Systems, Ltd
Kawasaki-shi,
Kanagawa (JP)**

(74) Representative: **Wenzel & Kalkoff
Grubes Allee 26
22143 Hamburg (DE)**

(56) References cited:
**EP-A- 1 028 552**

**Description**

FIELD OF THE INVENTION

This invention relates to a method and apparatus for implementing a cell search in a mobile wireless communication system. More particularly, the invention relates to a cell search method and circuit in W-CDMA (Wideband CDMA) system.

BACKGROUND OF THE INVENTION

In a wireless communication system adopting a CDMA(Code Division Multiple Access) cellular schema as multiple access technique for a plurality of mobile terminals, a cell search operation is required at an initial sync establishment(an initial acquisition) in a power on sequence of the mobile terminal or at a time of cell exchange accompanied by a movement of the mobile terminal.

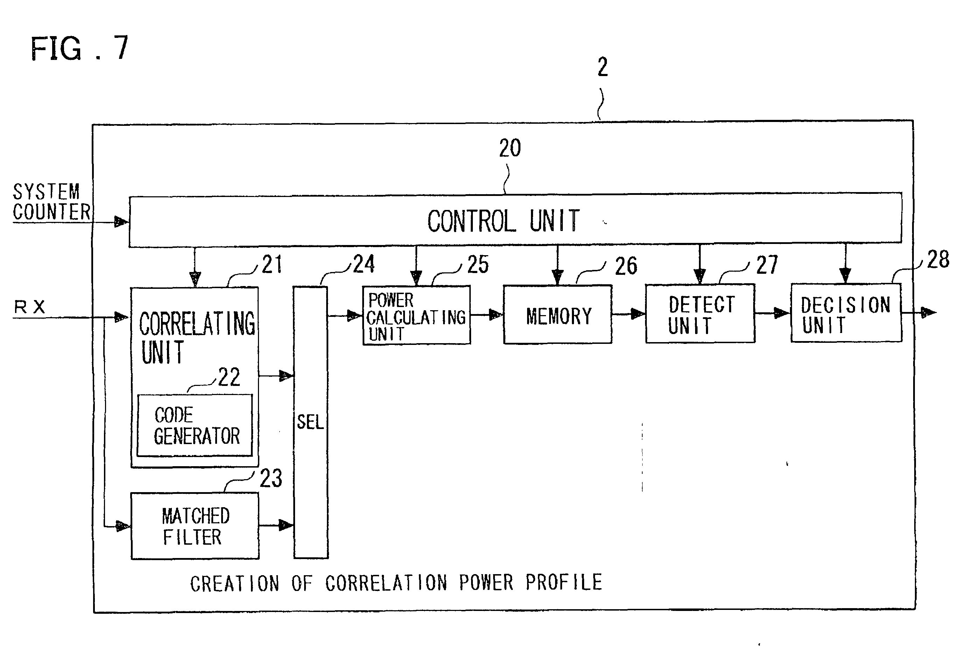

Fig. 7 is a block diagram illustrating an example of the structure of a cell search circuit 2 accommodated in a conventional mobile terminal. The cell search circuit 2 includes a matched filter 23, the input to which is a baseband receive signal (RX). The matched filter 23 is used for executing despread processing only in Step 1 (slot timing identification) of a cell search method in W-CDMA(IMT-2000) FDD mode proposed by the ITU (International Telecommunication Union). In SS (Spread Spectrum) communication, despreadding (inverse-spreading) indicates spread demodulation in a receiver side using the same spread code(PN code) as that of a transmission side. In SS (Spread Spectrum) communication , a matched filter, which performs the initial acquisition, etc., at high speed, comprises plural stages of registers, a plurality of multipliers for multiplying the output of each stage register by a coefficient, and an adder for adding the outputs of the plurality multipliers and outputting the sum. For example, in case of one symbol composed of 256 chips, a 256-stage matched filter is composed of 512 adders and a 512-word register for an I-component (in-phase component) and Q-component (quadrature component).

Despreading in Step 2 (frame timing identification) and Step 3 (scrambling code identification) in the cell search method proposed by the ITU is performed by a correlating unit 21. The correlating unit 21 is used commonly at both Steps 2 and 3. That is, the correlating unit 21 includes a code generator 22 which generates a code for frame timing identification in step 2 and a code for scrambling code identification in step 3, and a correlator in the correlating unit 21 calculates the correlation between the code generated by the code generator 22 and the baseband receive signal.

A selector 24 selectively outputs one of the outputs of the correlating unit 21 and matched filter 23.

A power calculation unit 25, to which the output of selector 24 is input, obtains the sum of the squares of I and Q components to calculate a power(electric power value).

On the assumption that one symbol comprises 256 chips and one slot is constituted by 10 symbols, a memory 26 comprises a 2560-word RAM (Random-Access Memory). The memory 26 is shared in the processing of Steps 1, 2 and 3.

A detect unit 27 searches for a maximum (peak) value among correlation values written to the memory 26 by the matched filter 23 and correlating unit 21.

A decision unit 28 compares the average value stored in memory 26 and the peak value using a threshold coefficient.

A control unit 20, which receives a system counter signal, controls the operation timing of each of the circuit components.

In this arrangement, the matched filter 23 of Step 1 outputs one correlation value chip by chip and finishes calculation at 2560 chips (one slot).

For a description of cell search circuits having a matched filter and correlator, refer to the specifications Japanese Patent Kokai Publication JP-A-11-88295 and Japanese Patent Kokai Publication JP-A-10-200447, by way of example.

With the conventional cell search method, definite candidates are narrowed down to one in each of Steps 1 to 3 and processing then advances to the next step. That is, only one candidate is output at Step 1. As a consequence, it is necessary to enhance reliability of the candidate of Step 1 by executing despreading at high speed and performing cumulative addition over several slots and hence the matched filter 23 is required in the conventional cell search circuit, as shown in Fig. 7.

A shortcoming with the conventional cell search circuit using a matched filter is that the matched filter, which is used only in Step 1, results in an increase of circuit scale and the increase in the amount of electric current consumed. EP 1 028 552 A1 discloses a cell search method according to the preamble of claim 1.

SUMMARY OF THE INVENTION

It is the object of the invention to provide a cell search method and circuit through which the scale of the circuitry and power consumption are reduced.

According to the invention, the foregoing object is attained by providing a cell search method and circuit with the features of claims 1 and 12, respectively.

BRIEF DESCRIPTION OF THE DRAWINGS

Fig. 1 is a block diagram illustrating the structure of a cell search circuit according to an embodiment of the invention;
Fig. 2 is a flowchart useful in describing a cell search operation according to this embodiment;

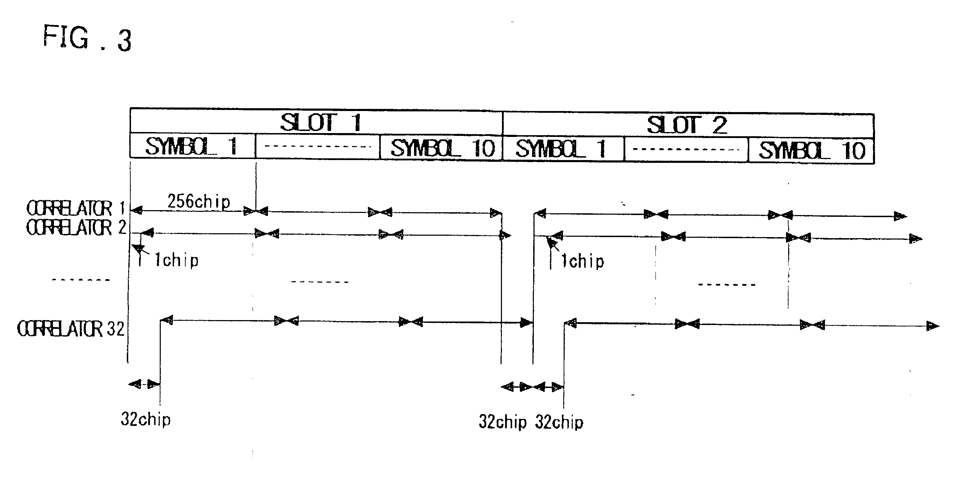

Fig. 3 is a diagram illustrating the operation timing of a correlating unit for creating a correlation power profile based upon a P-search code in this embodiment;
Fig. 4 is a diagram illustrating a method of searching for a peak value performed by a detect unit in this embodiment;
Fig. 5 is a diagram illustrating the operation timing of a correlating unit for creating a correlation power profile based upon an S search code in this embodiment;
Fig. 6 is a diagram illustrating the operation timing of a correlating unit in Step 1 according to a second embodiment of the invention; and
Fig. 7 is a diagram illustrating the structure of a cell search circuit according to the prior art.

DESCRIPTION OF THE PREFERRED EMBODIMENTS

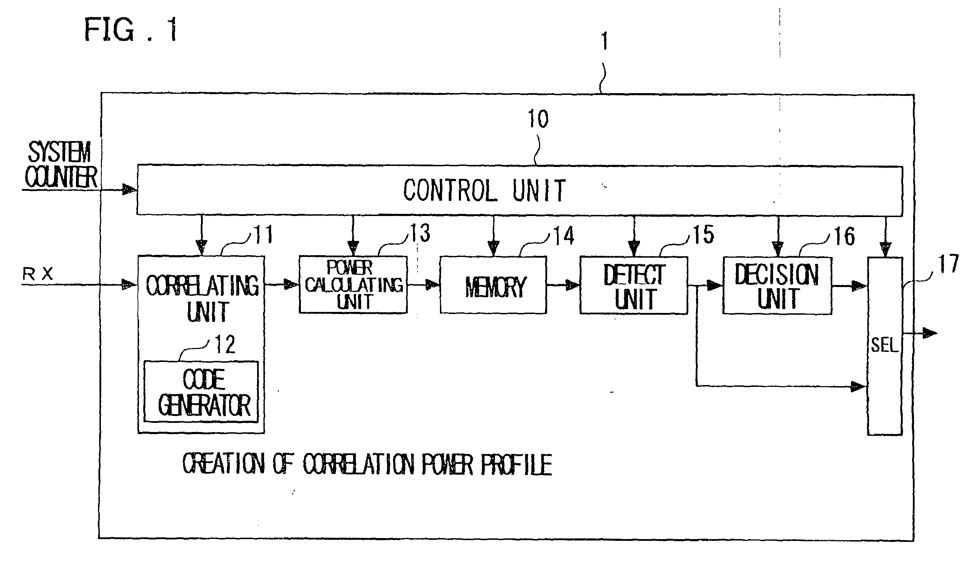

Preferred embodiments of the invention will now be described. The ITU (International Telecommunication Union) has proposed a cell search method in W-CDMA (IMT-2000) FDD (Frequency Division Multiplexing). The method includes a Step 1 (slot timing identification), a Step 2 (frame timing identification) and a Step 3 (scrambling code identification). The invention has the following features with regard to these steps of the proposed cell search method:
(1) A single detection cycle is adopted for Step 1 (slot timing identification) and Step 2 (frame timing identification).
(2) A plurality of candidates for slot timings are detected without narrowing the results of slot timing identification in Step 1 down to one candidate.
(3) One candidate indicating a maximum value is detected each predetermined time interval from the plurality of candidates for slot timing in Step 1.
(4) In frame timing identification of Step 2, frame timing identification is performed with respect to all candidates based upon the plurality of candidates obtained in Step 1.
(5) One candidate for frame timing indicating a maximum value is selected from among a plurality of candidates for frame timing obtained in Step 2.
(6) A threshold decision is performed to achieve identification with regard to the one candidate for frame timing in Step 2.
(7) In the threshold decision of (6) above, processing is reexecuted starting from Step 1 if the threshold decision criterion cannot be satisfied.
By using the cell search algorithm having the features (1) to (7) above, the matched filter, used only in Step 1 in the conventional cell search method, is eliminated, and the correlator used in Steps 2 and 3 is shared to implement Step 1. This makes it possible to reduce the scale of the circuitry and power consumption.
In a preferred embodiment of the invention, the cell search circuit includes a correlating unit 11 having a code generator 12, which generates a P-search code in a first step of identifying slot timing, an S-search code in a second step of identifying frame timing and a P-scrambling code in a third step of identifying a scrambling code, and a plurality of correlators provided in parallel, correlating unit 11 executing despread processing utilizing P-search code in the first step, despread processing utilizing S-search code in the second step and despread processing using the P-scrambling code in the third step; a power calculating unit 13 for calculating correlation power from the output of the correlating unit 11 and outputting the calculated correlation power; a memory 14 for storing the output of the power calculating unit 13 ; a detect unit 15 for detecting a maximum value of correlation powers stored in the memory 14 in each of the above-mentioned steps; a decision unit 16 for comparing an average value of correlation power stored in the memory with the maximum value, using a predetermined threshold coefficient, in the second and third steps; and a control unit 10 for controlling operation timing of the above-mentioned units.
Preferred embodiments of the invention will now be described in detail with reference to the accompanying drawings.
As shown in Fig. 1, the cell search circuit 1 is not provided with a matched filter of the kind shown in Fig. 7 illustrative of the conventional cell search circuit. Here a correlating unit 11, which receives a baseband receive signal (RX), executes Step 1 (identification of slot timing), a Step 2 (identification of frame timing) and a Step 3 (identification of scrambling code).
The correlating unit 11 comprises a code generator 12 for generating a P-search code (first search code; "P" indicates "Pre") in case of Step 1, an S-search code (second search code; "S" indicates "Secondary") in case of Step 2 and a P-scrambling code (third search code) in case of Step 3. The P-search code, S-search code and P-scrambling code are codes defined by the 3GPP (Third Generation Partnership Project). Refer to the 3GPP specifications (3G TS 25.231 Chapters 5.22, 5.23).

The correlating unit 11, which has 32 correlators, executes despread processing utilizing the P-search code generated by the code generator 12 in Step 1, despread processing utilizing the S-search code generated by the code generator 12 in Step 2 and despread processing using the P-scrambling code generated by the code generator 12 in Step 3. Thus, the correlating unit 11 is used by being shared in Steps 1, 2 and 3.

A power calculation unit 13, to which the output of the correlating unit 11 is input, calculates the square value of I and Q components.

A memory 14 comprises a RAM (Random-Access Memory) the capacity of which is 2560 words in a case where one symbol is composed of 256 chips and one slot is composed of 10 symbols. The memory 14 is shared for use in Steps 1, 2 and 3.

A detect unit 15 searches for a maximum value based upon correlation values that have been written to the memory 14 by the correlating unit 11.

A decision unit 16 compares the average value stored in the memory 14 and the maximum value using a threshold coefficient. In Step 1, however, processing of the decision unit 16 is omitted. That is, the output of the detect unit 15 is delivered via a selector 17 and is not subjected to processing by the decision unit 16.

A control unit 10, to which a system counter signal is input, controls the operation timing of each of the blocks 11 to 17.

The operation of the cell search circuit 1 according to this embodiment will now be described in detail. It will be assumed that one slot timing candidate in Step 1 is detected on a per-symbol basis, for a total of ten candidates in one slot.

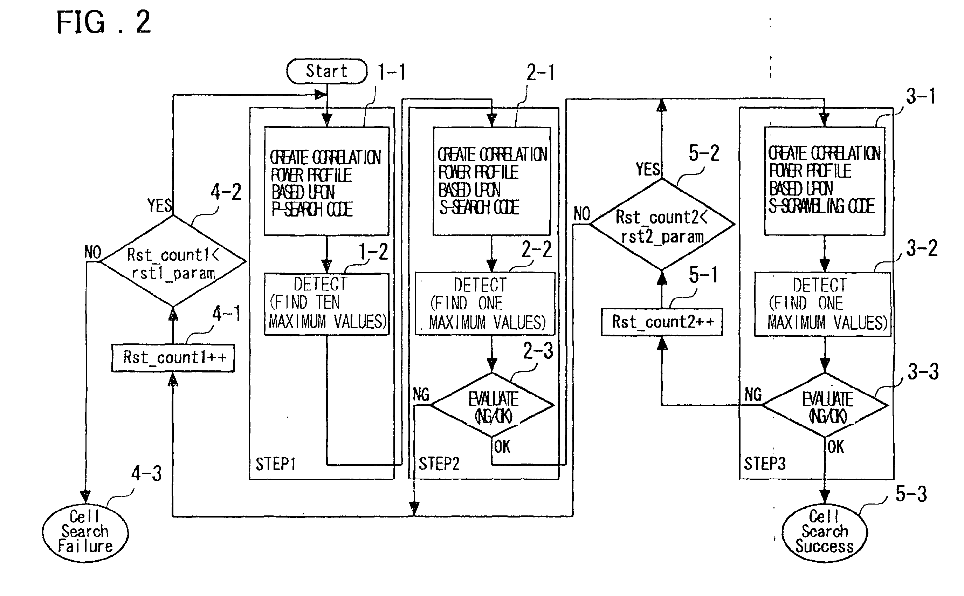

As shown in Fig. 2, the cell search is carried out by three steps, namely steps 1, 2 and 3.

When the cell search operation starts, creation of a correlation power profile begins immediately using the P-search code (step 1-1).

(1) The 32 parallel correlators 1 to 32 provided in the correlating unit 11 start operating chip by chip while each shifts the despreading position by one chip to thereby execute despreading over the duration of one symbol (256 chips). These results are delivered as the output.

(2) The processing of (1) above is executed successively over the duration of one slot (10 symbols).

(3) Next, after processing is halted for the duration of 32 chips, each of the correlators 1 to 32 performs the same operation (1) again.

(4) The processing of (1) to (3) above is executed over eight slots, thereby completing despreading at 2560 chip positions.

The output (correlation value) of the correlating unit 11 is provided to the power calculating unit 13, which calculates a correlation power by summing the squares of the I and Q components. The calculated correlation power value is written to the memory 14.

When operation of the correlating unit 11 and calculation by the power calculating unit 13 end and the calculated correlation power values have been written to the memory 14 at all timings in one slot (at 2560 chip positions), the detect unit 15 starts the search for the peak value (step 1-2).

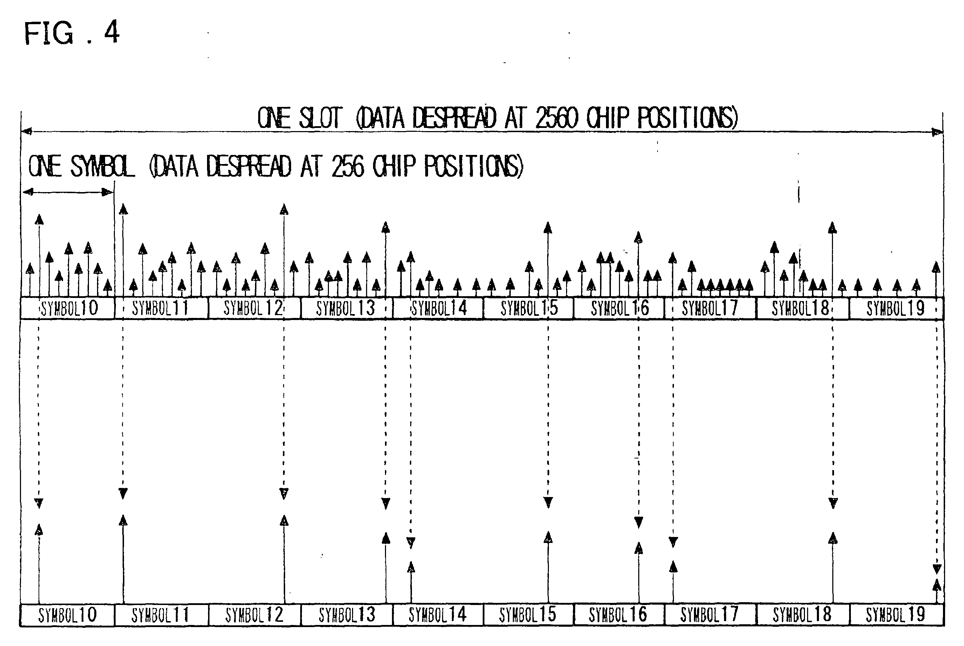

According to Fig. 4 the method includes detecting one candidate representing a maximum value over the duration of one symbol (256 chips), and detecting a total of ten candidates with regard to respective ones of ten symbols. This ends the processing of step 1.

Next, in step 2, the correlating unit 11 starts the creation of correlation power profile using the S-search code. This is performed at the timings of all ten candidates detected in step 1.

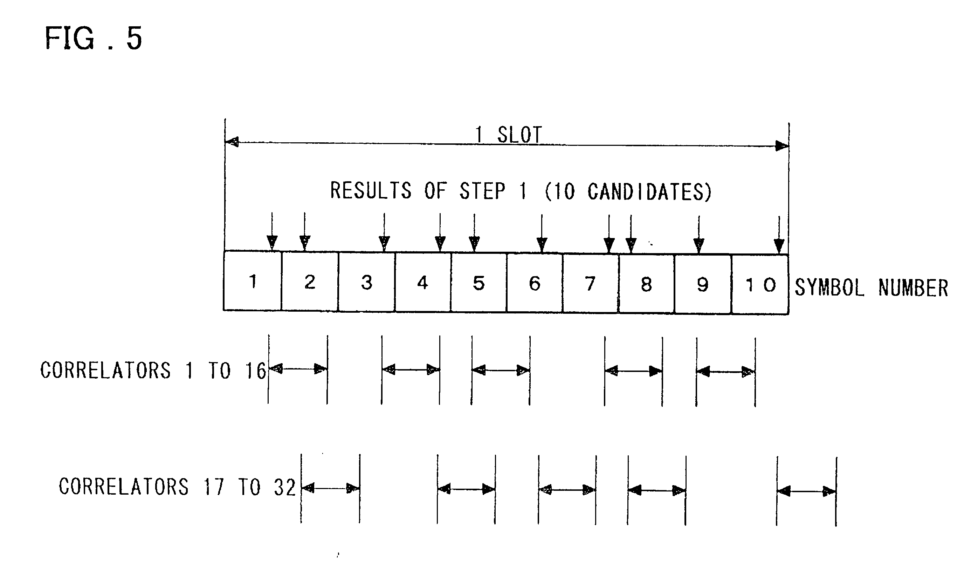

As shown in Fig. 5, the 32 correlators in the correlating unit 11 operate upon being divided into two groups, namely correlators 1 to 16 and correlators 17 to 32. Correlators in the same group operate at the same timing.

The first group of correlators 1 to 16 perform despreading by all codes of code numbers 1 to 16 of correlators 1 to 16, respectively.

The second group of correlators 17 to 32 perform despreading by all codes of code numbers 1 to 16 of correlators 17 to 32, respectively.

The first group of correlators 1 to 16 perform despreading of odd-numbered symbols and the second group of correlators 17 to 32 perform despreading of even-numbered symbols, with despreading being executed over the duration of one symbol (256 chips). The correlators output the results of despreading. This processing is executed over 15 slots, whereby despreading is completed.

The output of the correlating unit 11 is fed to the power calculating unit 13, which proceeds to calculate power and to-write the power value to the memory 14.

When operation of the correlating unit 11 and calculation by the power calculating unit 13 end and the calculated values have been written to the memory 14 at all timings, the detect unit 15 begins to search for the maximum value and detects one candidate representing a maximum value (step 2-2).

The decision unit 16 evaluates this candidate (step 2-3).

The decision unit 16 makes its decision using the average of the power values, which have been written to the memory 14, the maximum value and a predetermined threshold value.

If the maximum value exceeds (threshold value) × (average value), then control proceeds to step 3.

If the maximum value does not exceed (threshold value) × (average value), then control returns to step 1.

If a restart count (Rst_count1), which is for managing loop counts of step 1, exceeds a number of times (a predetermined set value) specified by a parameter (rst1_param), it is judged that the cell search failed and processing exits.

In other words, if the decision rendered at step 2-3 is NG, namely that the maximum value is not greater than (threshold value) × (average value), then the restart count (Rst_count1) is incremented at step 4-1 and it is determined at step 4-2 whether the restart count (Rst_count1) is smaller than the parameter (rst1_param). If the restart count (Rst_count1) is equal to or greater than the parameter (rst1_param), it is judged that the cell search failed (step 4-3). If the restart count (Rst_count1) is smaller that the parameter (rst1_param), processing is executed from step 1-1 onward.

At step 3, the correlating unit 11 starts the creation of the correlation power profile using the P-scrambling code at the timing of the single candidate detected at step 2.

The output (correlation value) of correlating unit 11 is supplied to the power calculating unit 13, which calculates power and write the calculated value to the memory 14.

When operation of the correlating unit 11 and calculation of power by the power calculating unit 13 end and the calculated values have been written to the memory 14 at all timings, the detect unit 15 starts the search for the maximum value and detects one candidate representing a maximum value (step 3-2).

. The decision unit 16 evaluates this candidate (step 3-3). The decision unit 16 makes its decision using the average of the power values that have been written to the memory 14, the maximum value and a predetermined threshold value.

If the maximum value exceeds (threshold value) × (average value), then the cell search finishes normally (step 5-3).

If the maximum value does not exceed (threshold value) × (average value), then control returns to step 3.

If a restart count (Rst_count2), which is for managing the loop count of step 3, is equal to or greater than a number of times specified by a parameter (rst2_param), control returns to step 1. In other words, if the decision rendered at step 3-3 is NG, then the restart count (Rst_count2) is incremented at step 5-1. If the restart count (Rst_count2) is greater than the parameter (rst2_param), control branches to step 4-1. If the restart count (Rst_count2) is smaller than the parameter (rst2_param), processing is executed from step 3-1 onward. The restart count (Rst_count1), which is for managing the loop count of step 1 is repeated, is incremented at step 4-1. If it is found at step 4-2 that the restart count (Rst_count1) is equal to or greater than a number of times specified by the parameter (rst1_param), then it is judged that the cell search failed.

A second embodiment of the invention will now be described. The basic structure of the second embodiment is similar to that of the first embodiment but the number of slot timing candidates involved in Step 1 differs.

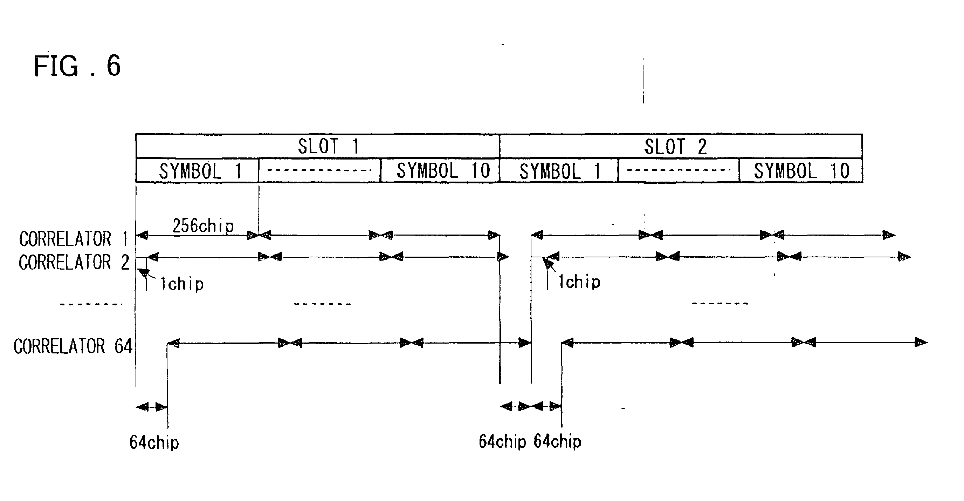

In the second embodiment of the invention, two timing slot candidates in Step 1 are detected on a per-symbol basis, for a total of 20 candidates. As shown in Fig. 6, the correlating unit has twice the number of correlators as the correlating unit 11 of the first embodiment.

(1) The 64 correlators 1 to 64 provided in the correlating unit initiate operation chip by chip while each shifts the despreading position by one chip to thereby execute despreading over the duration of one symbol (256 chips) and output the results.

(2) The processing of (1) above is executed successively over the duration of one slot (10 symbols).

(3) After processing is halted for the duration of 64 chips, each of the correlators performs the same operation again.

(4) The processing of (1) to (3) above is executed over four slots, thereby completing despreading at 2560 chip positions. That is, in comparison with the case where there were ten slot timing candidates, correlator operation ends in half the number of slots.

Though the second embodiment has circuitry of a scale somewhat larger than that of the first embodiment, there is a higher probability that an "OK" decision will be rendered at step 2-3.

A third embodiment of the invention will now be described. The basic structure of the third embodiment is similar to that of the first embodiment but the number of slot timing candidates detected in Step 1 is one on a per-symbol basis, for a total of five candidates.

Here the number of correlators in the correlating unit can be made 16. In this case, the operation of the detect unit 15 is such that slot timing candidates are all selected from even-numbered symbols if the symbol indicative of a maximum value is even-numbered and from odd-numbered symbols if the symbol indicative of a maximum value is odd-numbered.

In comparison with the first embodiment, the third embodiment results in a somewhat lower probability that an "OK" decision will be rendered at step 2-3 but makes it possible to reduce the scale of the circuitry.

The meritorious effects of the present invention are summarized as follows.

A first effect is that the scale of the circuitry can be reduced.

The reason for this is that in the invention, the correlator used in Step 2 (identification of frame timing) and in Step 3 (identification of scrambling code) in the conventional cell search circuit is shared in Step 1 (identification of slot timing), Step 2 (identification of frame timing) and Step 3 (identification of scrambling code) to implement the cell search. Thus the invention dispenses with a matched filter. If the matched filter is a 256-stage filter, then 512 adders and a 512-word register can be eliminated for the I and Q components. The end result is that the circuitry can be reduced by about 15,000 gates.

A second effect of the invention is that power consumption( amount of electric current consumed) can be reduced by a sharp cut of the circuitry scale.

**Claims**

1. A cell search method for use in a CDMA(Code Division Multiple Access) mobile communication system comprising: a first step of identifying slot timing; a second step of identifying frame timing; and a third step of identifying a scrambling code, **characterized in that**:

   a correlating unit(11) executes despread processing utilizing a P-search code in the first step of identifying slot timing;
   the correlating unit(11) executes despread processing utilizing an S-search code in the second step of identifying frame timing; and
   the correlating unit(11) executes despread processing utilizing a P-scrambling code in the third step of identifying a scrambling code;
   the correlating unit(11) calculating correlation values in each of the first, second and third steps.

2. The cell search method according to claim 1, **characterized in that**:

   calculation of correlation values in each of the first, second and third steps is performed by said correlating unit (11);
   a plurality of slot timing candidates are detected at the first step of identifying slot timing without narrowing results of slot timing identification down to one candidate, the plurality of slot timing candidates being detected in one slot period by detecting one candidate, for which correlation power indicates a maximum value, at predetermined constant time intervals;
   frame timing identification is performed with respect to all slot timing candidates in the second step of identifying frame timing based upon the plurality of slot timing candidates, and one frame timing candidate indicative of a maximum value is selected from among a plurality of candidates for frame timing; and
   correlation power with regard to the one timing candidate selected at the second step is obtained and identification is achieved by comparing said selected correlation power with a threshold at the third step of identifying a scrambling code.

3. The cell search method according to claim 1 wherein said correlating unit (11) receiving a baseband receive signal is provided with a code generator(12) which generates said P-search code in said first step of identifying slot timing, said S-search code in said second step of identifying frame timing and said P-scrambling code in said third step of identifying a scrambling code;

a power calculating unit(13), which receives a correlation-value output from the correlating unit(11), performs a power calculation and stores correlation power in a memory(14);

a detect unit(15) searches for a maximum value of correlation powers that have been stored in the memory(14) in the first to third steps; and

a decision unit(16) compares an average value of the correlation powers that have been stored in the memory(14) with the maximum value, using a predetermined threshold coefficient, in the second and third steps;

**characterized in that** in the first step, the detect unit(15) detects one slot timing candidate, which takes on a maximum value, over the duration of one symbol, and detects a plurality of slot timing candidates with regard to a plurality of symbols; and

in the second step, frame timing identification is performed with respect to all slot timing candidates based upon the plurality of slot timing candidates, and the detect unit(15) selects one frame timing candidate indicative of a maximum value from among a plurality of candidates for frame timing.

4. The cell search method as defined in claim 3, **characterized in that** the correlating unit(11) creates a correlation power profile based upon the P-search code in the first step, the correlating unit(11) being internally provided with a plurality of parallel-connected correlators which execute processing for starting operation chip by chip while each shifts a despreading position by one chip, executing despreading over the duration of one symbol and outputting the results, the processing being executing successively over one slot comprising a plurality of symbols;

after this processing is halted for the duration of a number of chips equivalent to the number of the plurality of correlators, processing similar to that of the preceding slot is executed again in the next slot;

the processing is executed over a predetermined plurality of slots, thereby completing despreading at a predetermined number of chip positions; and

when calculation of correlation values by the correlating unit(11) and calculation of powers by the power calculating unit(13) end and the correlation powers are written to the memory(14) at all timings of chip positions of the predetermined number, the detect unit (15) starts searching for a maximum value, detects one candidate, which takes on a maximum value, over the duration of one symbol, and detects a plurality of candidates with regard to a plurality of symbols.

5. The cell search method as defined in claim 3, **characterized in that** in the second step, the correlating unit(11), which obtains a correlation value based upon the S-search code, has a plurality (2N) of correlators which operate upon being divided into first and second groups, the correlators in each group operating at identical timings;

the correlators of the first group perform despreading respectively by all codes of code numbers 1 to N in order, the correlators of the second group perform despreading respectively by all codes of code numbers 1 to N in order, the correlators of the first group perform despreading of odd-numbered symbols and output the results and the second group of correlators perform despreading of even-numbered symbols and output the results, with despreading being executed over the duration of one symbol; this processing is executed over a prescribed number of slots to thereby complete despreading, and when calculation of correlation powers by the correlating unit(11) and the power calculating unit(13) ends and the correlation powers are written to the memory(14) at all timing candidates, the detect unit(15) starts searching for a maximum value of correlation power and detects one candidate that takes on a maximum value; and

the decision unit(16) evaluates the one candidate using an average of the power values that have been written to the memory(14), the maximum value and a predetermined threshold value.

6. The cell search method as defined in claim 5, **characterized in that** the decision unit(16) causes control to advance to the third step if the maximum value exceeds (threshold value) × (average value), and causes control to return to the first step if the maximum value does not exceed (threshold value) × (average value).

7. The cell search method as defined in claim 6, **characterized in that** if a number of times the first step is restarted exceeds a number of times specified by a predetermined parameter, the cell search is judged to have failed and the cell search is terminated.

8. The cell search method as defined in claim 3, **characterized in that** at the third step, a correlation power profile based upon the P-search code is created at the timing of the one candidate detected at the second step;

when calculation of correlation powers by the correlating unit(11) and the power calculating unit(13) ends and the correlation powers are written to the memory, the detect unit starts searching for a maximum value and detects one candidate that takes on a maximum value; and

the decision unit(16) evaluates the one candidate using an average of the power values that have been written to the memory(14), the maximum value and a predetermined threshold value.

9. The cell search method as defined in claim 3, **characterized in that** the cell search ends normally if the maximum value exceeds (threshold value) X (average value) and control is executed to return to the third step if the maximum value does not exceed (threshold value) × (average value).

10. The cell search method as defined in claim 3 or 4, **characterized in that** the detect unit(15) detects a plurality of slot timing candidates over the duration of one symbol instead of one slot timing candidate over the duration of one symbol in the first step.

11. The cell search method as defined in claim 3 or 4, **characterized in that** the detect unit(15) detects one slot timing candidate over the duration of a plurality of symbols instead of one slot timing candidate over the duration of one symbol in the first step.

12. A cell search circuit comprising:

a correlating unit (11) including:

a code generator(12) which generates a P-search code in a first step of identifying slot timing, an S-search code in a second step of identifying frame timing and a P-scrambling code in a third step of identifying a scrambling code; and
a plurality of correlators arranged in parallel; **characterized in that**:

the correlating unit (11) is adapted to execute despread processing utilizing the P-search code in the first step, despread processing utilizing the S-search code in the second step and despread processing using the P-scrambling code in the third step;
the cell search circuit further comprising:

a power calculating unit(13) which calculates correlation power from the output of the correlating unit(11) and outputs the calculated correlation power;
a memory(14) which stores the output of the power calculating unit;
a detect unit(15) which searches for a maximum value of correlation powers that have been stored in the memory(14) in each of the first, second and third steps;
a decision unit(16) which compares an average value of correlation powers that have been stored in the memory(14) with the maximum value, using a predetermined threshold coefficient, in the second and third steps; and
a control unit(10) which controls operation timing of each of the units.

13. The cell search circuit as defined in claim 12, **characterized in that** the correlating unit(11) creates a correlation power profile based upon the P-search code in the step 1, a plurality of the correlators arranged in parallel in the correlating unit which respectively execute an operation for starting operation chip by chip while each shifts a despreading position by one chip, executing despreading over the duration of one symbol and outputting the results, the operation being executed successively over one slot comprising a plurality of symbols, and the correlators then halt the operation for the duration of a number of chips equivalent to the number of the plurality of correlators and subsequently execute processing similar to that of the preceding slot in the next slot;
the processing is executed over a predetermined plurality of slots, thereby completing despreading at a predetermined number of chip positions, and when calculation of correlation values by the correlating unit and calculation of powers by the power calculating unit(13) end and the correlation powers are written to the memory(14) at all timings of chip positions of the predetermined number, the detect unit (15) starts searching for a maximum value, detects one candidate, which takes on a maximum value, over the duration of one symbol, and detects a plurality of candidates with regard to a plurality of symbols.

14. The cell search circuit as defined in claim 12, **characterized in that** at the second step, a correlation power profile based upon the P-search code is created at all timings of the plurality of candidates detected at the first step, the correlating unit has a plurality (2N) of correlators which operate upon being divided into first and second groups, the correlators in each group operating at identical timings;

the correlators of the first group perform despreading respectively by all codes of code numbers 1 to N in order, the correlators of the second group perform despreading respectively by all codes of code numbers 1 to N in order, the correlators of the first group perform despreading of odd-numbered symbols and output the results and the second group of correlators perform despreading of even-numbered symbols and output the results, with despreading being executed over the duration of one symbol;

this processing is executed over a prescribed number of slots to thereby complete despreading; and

when calculation of correlation values by the correlating unit(11) and calculation of powers by the power calculating unit(13) end and the correlation powers are written to the memory(14) at all timings, the detect unit(15) starts searching for a maximum value and detects one candidate that takes on a maximum value; and

the decision unit(16) evaluates the candidate using an average of the power values that have been written to the memory(14), the maximum value and a predetermined threshold value.

15. The cell search circuit as defined in claim 14, **characterized in that** the cell search circuit further comprises means for exercising control in such a manner that control shifts to the processing of the third step if the maximum value exceeds (threshold value) X (average value), and processing from the first step is executed if the maximum value does not exceed (threshold value) X (average value).

16. The cell search circuit as defined in claim 14 or 15, **characterized in that** the cell search circuit further comprises means for exercising control in such a manner that if a number of times the first step is restarted exceeds a number of times specified by a predetermined parameter, the cell search is judged to have failed and the cell search is terminated.

17. The cell search circuit as defined in claim 12, **characterized in that** at the third step, the correlating unit(11) creates a correlation power profile based upon the P-search code at the timing of the one candidate detected at the second step;

when calculation of correlation values by the correlating unit (11) and calculation of powers by the power calculating unit(13) end and the correlation powers are written to the memory(14), the detect unit(15) starts searching for a maximum value and detects one candidate that takes on a maximum value; and

the decision unit(16) evaluates the one candidate using an average of the power values that have been written to the memory(14), the maximum value and a predetermined threshold value.

18. The cell search circuit as defined in claim 17, **characterized in that** the cell search circuit further comprises means for exercising control in such a manner that the cell search ends normally if the maximum value exceeds (threshold value) $\times$ (average value) and control returns to the third step if the maximum value does not exceed (threshold value) $\times$ (average value).

19. The cell search circuit as defined in claim 12 or 13, **characterized in that** the detect unit is adapted to detect a plurality of slot timing candidates over the duration of one symbol in the first step.

20. The cell search circuit as defined in claim 12 or 13, **characterized in that** the detect unit is adapted to detect one slot timing candidate over the duration of a plurality of symbols in the first step and to detect a plurality of candidates in one slot.

21. A mobile terminal **characterized in that** the mobile terminal includes the cell search circuit as defined in any one of claims 12 to 20.

**Patentansprüche**

1. Zellsuchverfahren zur Verwendung in einem CDMA (Code Division Multiple Access; Codemultiplexverfahren)-Mobilkommunikationssystem, umfassend: einen ersten Schritt des Identifizierens von Schlitz-Zeiteinteilung, einen zweiten Schritt des Identifizierens von Rahmen-Zeiteinteilung, und einen dritten Schritt des Identifizierens eines Verwürfelungscodes, **dadurch gekennzeichnet, dass**:

eine Korrelationseinheit (11) Entspreizverarbeitung unter Verwendung eines P-Suchcodes in dem ersten Schritt des Identifizierens von Schlitz-Zeiteinteilung ausführt,

die Korrelationseinheit (11) Entspreizverarbeitung unter Verwendung eines S-Suchcodes in dem zweiten Schritt des Identifizierens von Rahmen-Zeiteinteilung ausführt, und
die Korrelationseinheit (11) Entspreizverarbeitung unter Verwendung eines P-Verwürfelungscodes in dem dritten Schritt des Identifizierens eines Verwürfelungscodes ausführt,

wobei die Korrelationseinheit (11) Korrelationswerte in jedem der ersten, zweiten und dritten Schritte berechnet.

2. Zellsuchverfahren nach Anspruch 1, **dadurch gekennzeichnet, dass**:

eine Berechnung von Korrelationswerten in jedem der ersten, zweiten und dritten Schritte durch die Korrelationseinheit (11) durchgeführt wird,
eine Mehrzahl an Schlitz-Zeiteinteilungskandidaten bei dem ersten Schritt des Identifizierens von Schlitz-Zeiteinteilung ermittelt wird, ohne die Ergebnisse der Schlitz-Zeiteinteilungsidentifikation auf einen Kandidaten einzuengen, wobei die Mehrzahl an Schlitz-Zeiteinteilungskandidaten in einem Schlitzzeitraum durch Ermitteln eines Kandidaten, für den eine Korrelationsleistung einen Höchstwert anzeigt, in vorbestimmten konstanten Zeitintervallen ermittelt wird,
eine Rahmen-Zeiteinteilungsidentifikation in Bezug auf alle Schlitz-Zeiteinteilungskandidaten in dem zweiten Schritt des Identifizierens von Rahmen-Zeiteinteilung basierend auf der Mehrzahl an Schlitz-Zeiteinteilungskandidaten durchgeführt wird, und ein Rahmen-Zeiteinteilungskandidat, der auf einen Höchstwert hinweist, aus einer Mehrzahl an Kandidaten für Rahmen-Zeiteinteilung ausgewählt wird, und
eine Korrelationsleistung im Hinblick auf den einen Zeiteinteilungskandidaten erhalten wird, der in dem zweiten Schritt ausgewählt wird, und eine Identifikation durch Vergleichen der ausgewählten Korrelationsleistung mit einer Schwelle bei dem dritten Schritt des Identifizierens eines Verwürfelungscodes erreicht wird.

3. Zellsuchverfahren nach Anspruch 1, wobei die Korrelationseinheit (11), die ein Basisband-Empfangssignal empfängt, mit einem Codeerzeuger (12) versehen ist, der den P-Suchcode in dem ersten Schritt des Identifizierens von Schlitz-Zeiteinteilung, den S-Suchkode in dem zweiten Schritt des Identifizierens von Rahmen-Zeiteinteilung und den P-Verwürfelungscode in dem dritten Schritt des Identifizierens eines Verwürfelungscodes erzeugt,
eine Leistungsberechnungseinheit (13), die einen Korrelationswert empfängt, der von der Korrelationseinheit (11) ausgegeben wird, eine Leistungsberechnung durchführt und Korrelationsleistung in einem Speicher (14) speichert,
eine Ermittlungseinheit (15) nach einem Höchstwert von Korrelationsleistungen sucht, die in den ersten bis dritten Schritten in dem Speicher (14) gespeichert wurden, und
eine Entscheidungseinheit (16) einen Mittelwert der Korrelationsleistungen, die in dem Speicher (14) gespeichert wurden, mit dem Höchstwert unter Verwendung eines vorbestimmten Schwellenkoeffizienten in den zweiten und dritten Schritten vergleicht,
**dadurch gekennzeichnet, dass** in dem ersten Schritt die Ermittlungseinheit (15) einen Schlitz-Zeiteinteilungskandidaten, der einen Höchstwert annimmt, während der Dauer eines Symbols ermittelt und eine Mehrzahl an Schlitz-Zeiteinteilungskandidaten im Hinblick auf eine Mehrzahl an Symbolen ermittelt, und
in dem zweiten Schritt eine Rahmen-Zeiteinteilungsidentifikation in Bezug auf alle Schlitz-Zeiteinteilungskandidaten basierend auf der Mehrzahl an Schlitz-Zeiteinteilungskandidaten durchgeführt wird, und die Ermittlungseinheit (15) einen Rahmen-Zeiteinteilungskandidaten, der auf einen Höchstwert hinweist, aus einer Mehrzahl an Kandidaten zur Rahmen-Zeiteinteilung auswählt.

4. Zellsuchverfahren wie in Anspruch 3 definiert, **dadurch gekennzeichnet, dass** die Korrelationseinheit (11) ein Korrelationsleistungsprofil basierend auf dem P-Suchcode in dem ersten Schritt erzeugt, wobei die Korrelationseinheit (11) intern mit einer Mehrzahl an parallel verbundenen Korrelatoren versehen ist, die eine Verarbeitung zum Starten eines Arbeitsablaufs Chip für Chip ausführen, während jede eine Entspreizposition um einen Chip verschiebt, ein Entspreizen während der Dauer eines Symbols ausführt und die Ergebnisse ausgibt, wobei die Verarbeitung sukzessive während eines Schlitzes ausgeführt wird, der eine Mehrzahl an Symbolen umfasst,
nachdem diese Verarbeitung für die Dauer einer Anzahl an Chips angehalten wird, die der Anzahl der Mehrzahl an Korrelatoren äquivalent ist, eine Verarbeitung, die der des vorangegangenen Schlitzes ähnlich ist, in dem nächsten Schlitz wieder ausgeführt wird,
die Verarbeitung während einer vorbestimmten Mehrzahl an Schlitzen ausgeführt wird, wobei ein Entspreizen bei einer vorbestimmten Anzahl an Chippositionen abgeschlossen wird, und,
wenn eine Berechnung von Korrelationswerten durch die Korrelationseinheit (11) und eine Berechnung von Leistungen durch die Leistungsberechnungseinheit (13) enden und die Korrelationsleistungen bei allen Zeiteinteilungen von Chippositionen der vorbestimmten Anzahl in den Speicher (14) geschrieben werden, die Ermittlungseinheit (15) anfängt, nach einem Höchstwert zu suchen, während der Dauer eines Symbols einen Kandidaten ermittelt, der einen Höchstwert annimmt, und eine Mehrzahl an Kandidaten im Hinblick auf eine Mehrzahl an Symbolen ermittelt.

**5.** Zellsuchverfahren wie in Anspruch 3 definiert, **dadurch gekennzeichnet, dass** in dem zweiten Schritt die Korrelationseinheit (11), die einen Korrelationswert erhält, der auf dem S-Suchcode basiert, eine Mehrzahl (2N) an Korrelatoren aufweist, die arbeiten, nachdem sie in erste und zweite Gruppen unterteilt werden, wobei die Korrelatoren in jeder Gruppe bei identischen Zeiteinteilungen arbeiten,

die Korrelatoren der ersten Gruppe ein Entspreizen jeweils für alle Codes der Codenummern 1 bis N der Reihe nach durchführen, die Korrelatoren der zweiten Gruppe ein Entspreizen jeweils für alle Codes der Codenummern 1 bis N der Reihe nach durchführen, die Korrelatoren der ersten Gruppe ein Entspreizen von Symbolen mit ungeraden Nummern durchführen und die Ergebnisse ausgeben, und die zweite Gruppe von Korrelatoren ein Entspreizen von Symbolen mit geraden Nummern durchführt und die Ergebnisse ausgibt, wobei ein Entspreizen während der Dauer eines Symbols ausgeführt wird, wobei diese Verarbeitung während einer festgelegten Anzahl an Schlitzen ausgeführt wird, um dabei ein Entspreizen abzuschließen, und, wenn eine Berechnung von Korrelationsleistungen durch die Korrelationseinheit (11) und die Leistungsberechnungseinheit (13) endet und die Korrelationsleistungen bei allen Zeiteinteilungskandidaten in den Speicher (14) geschrieben werden, die Ermittlungseinheit (15) beginnt, nach einem Höchstwert von Korrelationsleistung zu suchen, und ermittelt einen Kandidaten, der einen Höchstwert annimmt, und die Entscheidungseinheit (16) den einen Kandidaten unter Verwendung eines Durchschnitts der Leistungswerte, die in den Speicher (14) geschrieben wurden, des Höchstwerts und eines vorbestimmten Schwellenwerts auswertet.

**6.** Zellsuchverfahren wie in Anspruch 5 definiert, **dadurch gekennzeichnet, dass** die Entscheidungseinheit (16) eine Steuerung veranlasst, zu dem dritten Schritt vorzurücken, wenn der Höchstwert den (Schwellenwert) X (Mittelwert) überschreitet, und eine Steuerung veranlasst, zu dem ersten Schritt zurückzukehren, wenn der Höchstwert den (Schwellenwert) X (Mittelwert) nicht überschreitet.

**7.** Zellsuchverfahren wie in Anspruch 6 definiert, **dadurch gekennzeichnet, dass** die Zellsuche als fehlgeschlagen beurteilt wird und die Zellsuche beendet wird, wenn eine Anzahl an Malen, die der erste Schritt erneut gestartet wird, eine Anzahl an Malen überschreitet, die durch einen vorbestimmten Parameter angegeben ist.

**8.** Zellsuchverfahren wie in Anspruch 3 definiert, **dadurch gekennzeichnet, dass** bei dem dritten Schritt ein Korrelationsleistungsprofil basierend auf dem P-Suchcode bei der Zeiteinteilung des einen Kandidaten, der in dem zweiten Schritt ermittelt wird, erzeugt wird,

wenn eine Berechnung von Korrelationsleistungen durch die Korrelationseinheit (11) und die Leistungsberechnungseinheit (13) endet und die Korrelationsleistungen in den Speicher geschrieben werden, die Ermittlungseinheit beginnt, nach einem Höchstwert zu suchen, und einen Kandidaten ermittelt, der einen Höchstwert annimmt, und die Entscheidungseinheit (16) den einen Kandidaten unter Verwendung eines Durchschnitts der Leistungswerte, die in den Speicher (14) geschrieben wurden, des Höchstwerts und eines vorbestimmten Schwellenwerts auswertet.

**9.** Zellsuchverfahren wie in Anspruch 3 definiert, **dadurch gekennzeichnet, dass** die Zellsuche gewöhnlich endet, wenn der Höchstwert den (Schwellenwert) X (Mittelwert) überschreitet, und eine Steuerung ausgeführt wird, um zu dem dritten Schritt zurückzukehren, wenn der Höchstwert den (Schwellenwert) X (Mittelwert) nicht überschreitet.

**10.** Zellsuchverfahren wie in Anspruch 3 oder 4 definiert, **dadurch gekennzeichnet, dass** die Ermittlungseinheit (15) eine Mehrzahl an Schlitz-Zeiteinteilungskandidaten während der Dauer eines Symbols anstatt eines Schlitz-Zeiteinteilungskandidaten während der Dauer eines Symbols in dem ersten Schritt ermittelt.

**11.** Zellsuchverfahren wie in Anspruch 3 oder 4 definiert, **dadurch gekennzeichnet, dass** die Ermittlungseinheit (15) einen Schlitz-Zeiteinteilungskandidaten während der Dauer einer Mehrzahl an Symbolen anstatt eines Schlitz-Zeiteinteilungskandidaten während der Dauer eines Symbols in dem ersten Schritt ermittelt.

**12.** Zellsuchschaltung, umfassend:

eine Korrelationseinheit (11), umfassend:

einen Codeerzeuger (12), der einen P-Suchcode in einem ersten Schritt des Identifizierens von Schlitz-Zeiteinteilung, einen S-Suchcode in einem zweiten Schritt des Identifizierens von Rahmen-Zeiteinteilung und einen P-Verwürfelungscode in einem dritten Schritt des Identifizierens von Verwürfelungscode erzeugt, und

eine Mehrzahl an Korrelatoren, die parallel angeordnet sind,

**dadurch gekennzeichnet, dass**:

die Korrelationseinheit (11) angepasst ist, um Entspreizverarbeitung unter Verwendung des P-Suchcodes in dem ersten Schritt, Entspreizverarbeitung unter Verwendung des S-Suchcodes in dem zweiten Schritt und Entspreizverarbeitung unter Verwendung des P-Verwürfelungscodes in dem dritten Schritt auszuführen,

wobei die Zellsuchschaltung überdies umfasst:

eine Leistungsberechnungseinheit (13), die aus der Ausgabe der Korrelationseinheit (11) Korrelationsleistung berechnet und die berechnete Korrelationsleistung ausgibt, einen Speicher (14), der die Ausgabe der Leistungsberechnungseinheit speichert,

eine Ermittlungseinheit (15), die nach einem Höchstwert von Korrelationsleistungen sucht, die in dem Speicher (14) in jedem der ersten, zweiten und dritten Schritte gespeichert wurden,

eine Entscheidungseinheit (16), die einen Mittelwert von Korrelationsleistungen, die in dem Speicher (14) gespeichert wurden, mit dem Höchstwert unter Verwendung eines vorbestimmten Schwellenkoeffizienten in den zweiten und dritten Schritten vergleicht, und

eine Steuereinheit (10), die die Arbeitsablauf-Zeiteinteilung von jeder der Einheiten steuert.

13. Zellsuchschaltung wie in Anspruch 12 definiert, **dadurch gekennzeichnet, dass** die Korrelationseinheit (11) ein Korrelationsleistungsprofil basierend auf dem P-Suchcode in dem Schritt 1 erzeugt, eine Mehrzahl an Korrelatoren, die in der Korrelationseinheit parallel angeordnet sind, die jeweils einen Arbeitsablauf zum Starten eines Arbeitsablaufs Chip für Chip ausführt, während jede eine Entspreizposition um einen Chip verschiebt, Ausführen eines Entspreizens während der Dauer eines Symbols und Ausgeben der Ergebnisse, wobei der Arbeitsablauf sukzessive während eines Schlitzes ausgeführt wird, der eine Mehrzahl an Symbolen umfasst, und die Korrelatoren dann den Arbeitsablauf für die Dauer einer Anzahl an Chips anhalten, die der Anzahl der Mehrzahl an Korrelatoren äquivalent ist, und anschließend eine Verarbeitung ähnlich der des vorhergehenden Schlitzes in dem nächsten Schlitz ausführen,

die Verarbeitung über eine vorbestimmte Mehrzahl an Schlitzen ausgeführt wird, wobei ein Entspreizen bei einer vorbestimmten Anzahl an Chippositionen abgeschlossen wird, und, wenn eine Berechnung von Korrelationswerten durch die Korrelationseinheit und eine Berechnung von Leistungen durch die Leistungsberechnungseinheit (13) enden und die Korrelationsleistungen zu allen Zeiteinteilungen von Chippositionen der vorbestimmten Anzahl in den Speicher (14) geschrieben werden, die Ermittlungseinheit (15) beginnt, nach einem Höchstwert zu suchen, einen Kandidaten, der einen Höchstwert annimmt, während der Dauer eines Symbols ermittelt und eine Mehrzahl an Kandidaten im Hinblick auf eine Mehrzahl an Symbolen ermittelt.

14. Zellsuchschaltung, wie in Anspruch 12 definiert, **dadurch gekennzeichnet, dass** in dem zweiten Schritt ein Korrelationsleistungsprofil basierend auf dem P-Suchcode bei allen Zeiteinteilungen der Mehrzahl an Kandidaten, die bei dem ersten Schritt ermittelt werden, erzeugt wird, die Korrelationseinheit eine Mehrzahl (2N) an Korrelatoren aufweist, die arbeiten, nachdem sie in erste und zweite Gruppen unterteilt werden, wobei die Korrelatoren in jeder Gruppe bei identischen Zeiteinteilungen arbeiten,

die Korrelatoren der ersten Gruppe ein Entspreizen jeweils für alle Codes der Codenummern 1 bis N der Reihe nach durchführen, die Korrelatoren der zweiten Gruppe ein Entspreizen jeweils für alle Codes der Codenummern 1 bis N der Reihe nach durchführen, die Korrelatoren der ersten Gruppe ein Entspreizen von Symbolen mit ungeraden Nummern durchführen und die Ergebnisse ausgeben, und die zweite Gruppe von Korrelatoren ein Entspreizen von Symbolen mit geraden Nummern durchführt und die Ergebnisse ausgibt, wobei ein Entspreizen während der Dauer eines Symbols ausgeführt wird,

diese Verarbeitung während einer festgelegten Anzahl an Schlitzen ausgeführt wird, um dabei ein Entspreizen abzuschließen, und

wenn eine Berechnung von Korrelationswerten durch die Korrelationseinheit (11) und eine Berechnung von Leistungen durch die Leistungsberechnungseinheit (13) endet und die Korrelationsleistungen bei allen Zeiteinteilungen in den Speicher (14) geschrieben werden, die Ermittlungseinheit (15) beginnt, nach einem Höchstwert zu suchen, und einen Kandidaten ermittelt, der einen Höchstwert annimmt, und

die Entscheidungseinheit (16) den Kandidaten unter Verwendung eines Durchschnitts der Leistungswerte, die in den Speicher (14) geschrieben wurden, des Höchstwerts und eines vorbestimmten Schwellenwerts auswertet.

15. Zellsuchschaltung wie in Anspruch 14 definiert, **dadurch gekennzeichnet, dass** die Zellsuchschaltung überdies Mittel umfasst, um eine Steuerung in einer Weise auszuüben, dass eine Steuerung zu der Verarbeitung des dritten Schritts übergeht, wenn der Höchstwert den (Schwellenwert) X (Mittelwert) überschreitet, und eine Verarbeitung von dem ersten Schritt ausgeführt wird, wenn der Höchstwert nicht den (Schwellenwert) X (Mittelwert) überschreitet.

**16.** Zellsuchschaltung wie in Anspruch 14 oder 15 definiert, **dadurch gekennzeichnet, dass** die Zellsuchschaltung überdies Mittel umfasst, um eine Steuerung in einer Weise auszuüben, dass die Zellsuche als fehlgeschlagen beurteilt wird und die Zellsuche beendet wird, wenn eine Anzahl an Malen, die der erste Schritt erneut gestartet wird, eine Anzahl an Malen überschreitet, die durch einen vorbestimmten Parameter angegeben ist.

**17.** Zellsuchschaltung wie in Anspruch 12 definiert, **dadurch gekennzeichnet, dass** bei dem dritten Schritt die Korrelationseinheit (11) ein Korrelationsleistungsprofil basierend auf dem P-Suchcode bei der Zeiteinteilung des einen Kandidaten erzeugt, der in dem zweiten Schritt ermittelt wird,
wenn eine Berechnung von Korrelationswerten durch die Korrelationseinheit (11) und eine Berechnung von Leistungen durch die Leistungsberechnungseinheit (13) enden und die Korrelationsleistungen in den Speicher (14) geschrieben werden, die Ermittlungseinheit (15) beginnt, nach einem Höchstwert zu suchen, und einen Kandidaten ermittelt, der einen Höchstwert annimmt, und
die Entscheidungseinheit (16) den einen Kandidaten unter Verwendung eines Durchschnitts der Leistungswerte, die in den Speicher (14) geschrieben wurden, des Höchstwerts und eines vorbestimmten Schwellenwerts auswertet.

**18.** Zellsuchschaltung wie in Anspruch 17 definiert, **dadurch gekennzeichnet, dass** die Zellsuchschaltung überdies Mittel umfasst, um eine Steuerung in einer Weise auszuüben, dass die Zellsuche gewöhnlich endet, wenn der Höchstwert den (Schwellenwert) X (Mittelwert) überschreitet, und eine Steuerung zu dem dritten Schritt zurückkehrt, wenn der Höchstwert den (Schwellenwert) X (Mittelwert) nicht überschreitet.

**19.** Zellsuchschaltung wie in Anspruch 12 oder 13 definiert, **dadurch gekennzeichnet, dass** die Ermittlungseinheit angepasst ist, eine Mehrzahl an Schlitz-Zeiteinteilungskandidaten während der Dauer eines Symbols in dem ersten Schritt zu ermitteln.

**20.** Zellsuchschaltung wie in Anspruch 12 oder 13 definiert, **dadurch gekennzeichnet, dass** die Ermittlungseinheit angepasst ist, einen Schlitz-Zeiteinteilungskandidaten während der Dauer einer Mehrzahl an Symbolen in dem ersten Schritt zu ermitteln und eine Mehrzahl an Kandidaten in einem Schlitz zu ermitteln.

**21.** Mobiles Endgerät, **dadurch gekennzeichnet, dass** das mobile Endgerät eine Zellsuchschaltung wie in einem Ansprüche 12 bis 20 definiert umfasst.

**Revendications**

**1.** Procédé de recherche de cellules pour une utilisation dans un système de communication mobile AMRC (Accès Multiple par Répartition de Code) comprenant : une première étape consistant à identifier un rythme de créneaux ; une deuxième étape consistant à identifier un rythme de trames ; et une troisième étape consistant à identifier un code de brouillage, **caractérisé en ce que** :

une unité de mise en corrélation (11) exécute un traitement de désétalement utilisant un code de recherche P dans la première étape d'identification de rythme de créneaux ;
l'unité de mise en corrélation (11) exécute un traitement de désétalement utilisant un code de recherche S dans la seconde étape d'identification de rythme de trames ; et
l'unité de mise en corrélation (11) exécute un traitement de désétalement utilisant un code de brouillage P dans la troisième étape d'identification d'un code de brouillage ;
l'unité de mise en corrélation (11) calculant des valeurs de corrélation dans chacune des première, deuxième et troisième étapes.

**2.** Procédé de recherche de cellules selon la revendication 1, **caractérisé en ce que** :

le calcul des valeurs de corrélation dans chacune des première, deuxième et troisième étapes est accompli par ladite unité de mise en corrélation (11) ;
une pluralité de rythmes de créneaux potentiels sont détectés au niveau de la première étape d'identification de rythme de créneaux sans réduire les résultats de l'identification de rythme de créneaux à un rythme potentiel, la pluralité de rythmes de créneaux potentiels étant détectés dans une période de créneau par détection d'un rythme potentiel, pour lequel une puissance de corrélation indique une valeur maximale, à des intervalles de temps constants prédéterminés ;
une identification de rythme de trames étant accomplie en ce qui concerne l'ensemble des rythmes de créneaux potentiels dans la deuxième étape d'identification de rythme de trames sur la base de la pluralité de rythmes de créneaux potentiels, et un rythme de trames potentiel indiquant une valeur maximale est sélectionné parmi une pluralité de rythmes potentiels pour un rythme de trames ; et

une puissance de corrélation en ce qui concerne le rythme potentiel sélectionné au niveau de la deuxième étape est obtenue et l'identification est réalisée en comparant ladite puissance de corrélation sélectionnée à un seuil au niveau de la troisième étape d'identification d'un code de brouillage.

**3.** Procédé de recherche de cellules selon la revendication 1, dans lequel ladite unité de mise en corrélation (11) recevant un signal de réception de bande de base est prévue avec un générateur de code (12) qui génère ledit code de recherche P dans ladite première étape d'identification de rythme de créneaux, ledit code de recherche S dans ladite deuxième étape d'identification du rythme de trames et ledit code de brouillage P dans ladite troisième étape d'identification d'un code de brouillage ;

une unité de calcul de puissance (13), qui reçoit une valeur de corrélation sortie par l'unité de mise en corrélation (11), accomplit un calcul de puissance et stocke la puissance de corrélation dans une mémoire (14) ;

une unité de détection (15) recherche une valeur maximale des puissances de corrélation qui ont été stockées dans la mémoire (14) dans les première à troisième étapes ; et

une unité de décision (16) compare une valeur moyenne des puissances de corrélation qui ont été stockées dans la mémoire (14) à la valeur maximale, au moyen d'un coefficient de seuil prédéterminé, dans les deuxième et troisième étapes ;

**caractérisé en ce que** dans la première étape, l'unité de détection (15) détecte un rythme de créneaux potentiel, qui prend une valeur maximale, pendant la durée d'un symbole, et détecte une pluralité de rythmes de créneaux potentiels en ce qui concerne une pluralité de symboles ; et

dans la deuxième étape, une identification de rythme de trames est accomplie en ce qui concerne l'ensemble des rythmes de créneaux potentiels sur la base de la pluralité de rythmes de créneaux potentiels, et l'unité de détection (15) sélectionne un rythme de trames potentiel indiquant une valeur maximale parmi une pluralité de rythmes de trames potentiels.

**4.** Procédé de recherche de cellules selon la revendication 3, **caractérisé en ce que** l'unité de mise en corrélation (11) crée un profil de puissance de corrélation sur la base du code de recherche P dans la première étape, l'unité de mise en corrélation (11) étant prévue, en interne, avec une pluralité de corrélateurs connectés en parallèle qui exécutent un traitement pour le démarrage d'une opération puce par puce, tandis que chacun décale une position de désétalement d'une puce, exécutant un désétalement pendant la durée d'un symbole et sortant les résultats, le traitement étant exécuté successivement pendant un créneau comprenant une pluralité de symboles ;

une fois ce traitement interrompu pendant la durée d'un certain nombre de puces équivalent au nombre de la pluralité de corrélateurs, un traitement similaire à celui du créneau précédent est à nouveau exécuté dans le créneau suivant ;

le traitement est exécuté pendant une pluralité prédéterminée de créneaux, ce qui complète de ce fait un désétalement au niveau d'un nombre prédéterminé de positions de puces ; et

lorsque le calcul des valeurs de corrélation par l'unité de mise en corrélation (11) et le calcul des puissances par l'unité de calcul de puissance (13) se terminent et que les puissances de corrélation sont écrites dans la mémoire (14) à tous les rythmes de positions de puces du nombre prédéterminé, l'unité de détection (15) démarre la recherche d'une valeur maximale, détecte une valeur potentielle, qui prend une valeur maximale, pendant la durée d'un symbole, et détecte une pluralité de valeurs potentielles en ce qui concerne une pluralité de symboles.

**5.** Procédé de recherche de cellules selon la revendication 3, **caractérisé en ce que** dans la deuxième étape, l'unité de mise en corrélation (11), qui obtient une valeur de corrélation sur la base du code de recherche S, a une pluralité (2N) de corrélateurs qui fonctionnent en étant divisés en premier et second groupes, les corrélateurs dans chaque groupe fonctionnant à des rythmes identiques ;

les corrélateurs du premier groupe accomplissent un désétalement respectivement grâce à l'ensemble des codes des numéros de code 1 à N dans l'ordre, les corrélateurs du second groupe accomplissent un désétalement respectivement grâce à l'ensemble des codes des numéros de code 1 à N dans l'ordre, les corrélateurs du premier groupe accomplissent un désétalement de symboles à numéro impair et sortent les résultats et le second groupe de corrélateurs accomplit un désétalement de symboles à nombre pair et sort les résultats, le désétalement étant exécuté pendant la durée d'un symbole ; ce traitement est exécuté pendant un nombre prescrit de créneaux pour compléter de ce fait un désétalement, et lorsque le calcul de puissances de corrélation par l'unité de mise en corrélation (11) et l'unité de calcul de puissance (13) se termine et que les puissances de corrélation sont écrites dans la mémoire (14) à tous les rythmes potentiels, l'unité de détection (15) démarre une recherche de valeur maximale de puissance de corrélation et détecte une valeur potentielle qui prend une valeur maximale ; et

l'unité de décision (16) évalue la valeur potentielle au moyen d'une moyenne des valeurs de puissance qui ont été écrites dans la mémoire (14), la valeur maximale et une valeur de seuil prédéterminée.

6. Procédé de recherche de cellules selon la revendication 5, **caractérisé en ce que** l'unité de décision (16) amène la commande à avancer jusqu'à la troisième étape si la valeur maximale dépasse (valeur de seuil) x (valeur moyenne), et amène la commande à retourner à la première étape si la valeur maximale ne dépasse pas (valeur de seuil) x (valeur moyenne).

7. Procédé de recherche de cellules selon la revendication 6, **caractérisé en ce que** si un nombre de temps de redémarrage de la première étape dépasse un nombre de temps spécifiés par un paramètre prédéterminé, la recherche de cellules est jugée comme ayant échoué et la recherche de cellules se termine.

8. Procédé de recherche de cellules selon la revendication 3, **caractérisé en ce qu'**au niveau de la troisième étape, un profil de puissance de corrélation sur la base du code de recherche P est créé au rythme du rythme potentiel détecté au niveau de la deuxième étape ;
lorsque le calcul de puissances de corrélation par l'unité de mise en corrélation (11) et l'unité de calcul de puissance (13) se termine et que les puissances de corrélation sont écrites dans la mémoire, l'unité de détection démarre la recherche d'une valeur maximale et détecte une valeur potentielle qui prend une valeur maximale ; et
l'unité de décision (16) évalue la valeur potentielle au moyen d'une moyenne des valeurs de puissance qui ont été écrites dans la mémoire (14), la valeur maximale et une valeur de seuil prédéterminée.

9. Procédé de recherche de cellules selon la revendication 3, **caractérisé en ce que** la recherche de cellules se termine normalement si la valeur maximale dépasse (valeur de seuil) x (valeur moyenne) et la commande est exécutée pour retourner à la troisième étape si la valeur maximale ne dépasse pas (valeur de seuil) x (valeur moyenne).

10. Procédé de recherche de cellules selon l'une quelconque des revendications 3 ou 4, **caractérisé en ce que** l'unité de détection (15) détecte une pluralité de rythmes de créneaux potentiels pendant la durée d'un symbole plutôt qu'un seul rythme de créneaux potentiel pendant la durée d'un symbole dans la première étape.

11. Procédé de recherche de cellules selon la revendication 3 ou 4, **caractérisé en ce que** l'unité de détection (15) détecte un rythme de créneaux potentiel pendant la durée d'une pluralité de symboles plutôt qu'un seul rythme de créneaux potentiel pendant la durée d'un symbole dans la première étape.

12. Circuit de recherche de cellules comprenant :

une unité de mise en corrélation (11) comportant :

un générateur de codes (12) qui génère un code de recherche P dans une première étape d'identification de rythme de créneaux, un code de recherche S dans une deuxième étape d'identification de rythme de trames et un code de brouillage P dans une troisième étape d'identification d'un code de brouillage ; et une pluralité de corrélateurs agencés parallèlement ; **caractérisé en ce que** :

l'unité de mise en corrélation (11) est adaptée pour exécuter un traitement de désétalement au moyen du code de recherche P dans la première étape, un traitement de désétalement utilisant le code de recherche S dans la deuxième étape et un traitement de désétalement utilisant le code de brouillage P dans la troisième étape ;
le circuit de recherche de cellules comprenant en outre :

une unité de calcul de puissance (13) qui calcule une puissance de corrélation à partir de la sortie de l'unité de mise en corrélation (11) et sort la puissance de corrélation calculée ;
une mémoire (14) qui stocke la sortie de l'unité de calcul de puissance ;
une unité de détection (15) qui recherche une valeur maximale des puissances de corrélation qui ont été stockées dans la mémoire (14) dans chacune des première, deuxième et troisième étapes ;
une unité de décision (16) qui compare une valeur moyenne des puissances de corrélation qui ont été stockées dans la mémoire (14) à la valeur maximale, au moyen d'un coefficient de seuil prédéterminé, dans les deuxième et troisième étapes ; et
une unité de commande (10) qui commande un rythme de fonctionnement de chacune des unités.

**13.** Circuit de recherche de cellules selon la revendication 12, **caractérisé en ce que** l'unité de mise en corrélation (11) crée un profil de puissance de corrélation sur la base du code de recherche P dans l'étape 1, une pluralité de corrélateurs étant agencés parallèlement dans l'unité de mise en corrélation qui exécutent une opération pour le démarrage d'une opération puce par puce tandis que chacun décale une position de désétalement d'une puce, exécutant un désétalement pendant la durée d'un symbole et sortant les résultats, l'opération étant exécutée successivement pendant un créneau comprenant une pluralité de symboles, et les corrélateurs interrompant ensuite l'opération pendant la durée d'un certain nombre de puces équivalent au nombre de la pluralité de corrélateurs et exécutant par la suite un traitement similaire à celui du créneau précédent, dans le créneau suivant ;

le traitement est exécuté pendant une pluralité prédéterminée de créneaux, complétant de ce fait un désétalement au niveau d'un nombre prédéterminé de positions de puces, et lorsque le calcul des valeurs de corrélation par l'unité de mise en corrélation et le calcul des puissances par l'unité de calcul de puissance (13) se terminent et que les puissances de corrélation sont écrites dans la mémoire (14) à tous les rythmes de positions de puces du nombre prédéterminé, l'unité de détection (15) démarre une recherche de valeur maximale, détecte une valeur potentielle, qui prend une valeur maximale, pendant la durée d'un symbole, et détecte une pluralité de valeurs potentielles en ce qui concerne une pluralité de symboles.

**14.** Circuit de recherche de cellules selon la revendication 12, **caractérisé en ce que**, au niveau de la deuxième étape, un profil de puissance de corrélation basé sur le code de recherche P est créé à tous les rythmes de la pluralité de rythmes potentiels détectés au niveau de la première étape, l'unité de mise en corrélation ayant une pluralité (2N) de corrélateurs qui fonctionnent en étant divisés en premier et second groupes, les corrélateurs dans chaque groupe fonctionnant à des rythmes identiques ;

les corrélateurs du premier groupe accomplissent un désétalement respectivement grâce à l'ensemble des codes des numéros de code 1 à N dans l'ordre, les corrélateurs du second groupe accomplissent un désétalement respectivement grâce à l'ensemble des codes des numéros de code 1 à N dans l'ordre, les corrélateurs du premier groupe accomplissent un désétalement des symboles à nombre impair et sortent les résultats et le second groupe de corrélateurs accomplit un désétalement de symboles à nombre pair et sort les résultats, le désétalement étant exécuté pendant la durée d'un symbole ;

ce traitement est exécuté pendant un nombre prescrit de créneaux pour compléter de ce fait le désétalement ; et lorsque le calcul des valeurs de corrélation par l'unité de mise en corrélation (11) et le calcul de puissances par l'unité de calcul de puissance (13) se terminent et que les puissances de corrélation sont écrites dans la mémoire (14) à tous les rythmes, l'unité de détection (15) démarre une recherche de valeur maximale et détecte une valeur potentielle qui prend une valeur maximale ; et

l'unité de décision (16) évalue la valeur potentielle au moyen d'une moyenne des valeurs de puissance qui ont été écrites dans la mémoire (14), la valeur maximale et une valeur de seuil prédéterminée.

**15.** Circuit de recherche de cellules selon la revendication 14, **caractérisé en ce que** le circuit de recherche de cellules comprend en outre un moyen destiné à exercer une commande de telle sorte que la commande se déplace vers le traitement de la troisième étape si la valeur maximale dépasse (valeur de seuil) x (valeur moyenne), et le traitement de la première étape est exécuté si la valeur maximale ne dépasse pas (valeur de seuil) x (valeur moyenne).

**16.** Circuit de recherche de cellules selon la revendication 14 ou 15, **caractérisé en ce que** le circuit de recherche de cellules comprend en outre un moyen destiné à exercer une commande de telle sorte que si un nombre de temps de redémarrage de la première étape dépasse un nombre de temps spécifié par un paramètre prédéterminé, la recherche de cellules est jugée comme ayant échoué et la recherche de cellules se termine.

**17.** Circuit de recherche de cellules selon la revendication 12, **caractérisé en ce que**, au niveau de la troisième étape, l'unité de mise en corrélation (11) crée un profil de puissance de corrélation sur la base du code de recherche P au rythme du rythme potentiel détecté au niveau de la deuxième étape ;

lorsque le calcul des valeurs de corrélation par l'unité de mise en corrélation (11) et le calcul des puissances par l'unité de calcul de puissance (13) se terminent et que les puissances de corrélation sont écrites dans la mémoire (14), l'unité de détection (15) démarre une recherche d'une valeur maximale et détecte une valeur potentielle qui prend une valeur maximale ; et

l'unité de décision (16) évalue la valeur potentielle au moyen d'une moyenne des valeurs de puissance qui ont été écrites dans la mémoire (14), la valeur maximale et une valeur de seuil prédéterminée.

**18.** Circuit de recherche de cellules selon la revendication 17, **caractérisé en ce que** le circuit de recherche de cellules comprend en outre un moyen destiné à exercer une commande de telle sorte que la recherche de cellules se termine normalement si la valeur maximale dépasse (valeur de seuil) x (valeur moyenne) et la commande retourne à la troisième étape si la valeur maximale ne dépasse pas (valeur de seuil) x (valeur moyenne).

19. Circuit de recherche de cellules selon la revendication 12 ou 13, **caractérisé en ce que** l'unité de détection est adaptée pour détecter une pluralité de rythmes de créneaux potentiels pendant la durée d'un symbole dans la première étape.

20. Circuit de recherche de cellules selon la revendication 12 ou 13, **caractérisé en ce que** l'unité de détection est adaptée pour détecter un rythme de créneaux potentiel pendant la durée d'une pluralité de symboles dans la première étape et pour détecter une pluralité de rythmes potentiels dans un créneau.

21. Terminal mobile **caractérisé en ce que** le terminal mobile comporte le circuit de recherche de cellules selon l'une quelconque des revendications 12 à 20.

# FIG. 1

SYSTEM COUNTER

CONTROL UNIT 10

RX

CORRELATING UNIT 11

CODE GENERATOR 12

POWER CALCULATING UNIT 13

MEMORY 14

DETECT UNIT 15

DECISION UNIT 16

SEL 17

CREATION OF CORRELATION POWER PROFILE

1

EP 1 184 993 B1

# FIG . 2

EP 1 184 993 B1

FIG . 3

# FIG . 4

ONE SLOT (DATA DESPREAD AT 2560 CHIP POSITIONS)

ONE SYMBOL (DATA DESPREAD AT 256 CHIP POSITIONS)

| SYMBOL10 | SYMBOL11 | SYMBOL12 | SYMBOL13 | SYMBOL14 | SYMBOL15 | SYMBOL16 | SYMBOL17 | SYMBOL18 | SYMBOL19 |

| SYMBOL10 | SYMBOL11 | SYMBOL12 | SYMBOL13 | SYMBOL14 | SYMBOL15 | SYMBOL16 | SYMBOL17 | SYMBOL18 | SYMBOL19 |

# FIG . 5

RESULTS OF STEP 1 (10 CANDIDATES)

1 SLOT

| 1 | 2 | 3 | 4 | 5 | 6 | 7 | 8 | 9 | 10 | SYMBOL NUMBER |

CORRELATORS 1 TO 16

CORRELATORS 17 TO 32

EP 1 184 993 B1

# FIG . 6

|  | SLOT 1 | | | SLOT 2 | | |
|---|---|---|---|---|---|---|
| | SYMBOL 1 | ------------- | SYMBOL 10 | SYMBOL 1 | ------------- | SYMBOL 10 |

CORRELATOR 1 — 256chip

CORRELATOR 2 — 1chip

CORRELATOR 64

64chip    64chip 64chip

EP 1 184 993 B1

FIG. 7

SYSTEM COUNTER

R X

2

20

CONTROL UNIT

21 CORRELATING UNIT

22 CODE GENERATOR

23 MATCHED FILTER

SEL

24

25 POWER CALCULATING UNIT

26 MEMORY

27 DETECT UNIT

28 DECISION UNIT

CREATION OF CORRELATION POWER PROFILE

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11088295 A
- JP 10200447 A
- EP 1028552 A1